# EUROPÄISCHE PATENTSCHRIFT

(11) **EP 3 059 607 B1**
(45) Veröffentlichungstag und Bekanntmachung des Hinweises auf die Patenterteilung: **19.08.2020**
(21) Anmeldenummer: 16000301.8
(22) Anmeldetag: 05.02.2016
(51) Int. Cl.: G01S 7/06, G01S 7/12, G01S 7/22, G01S 13/87, G01S 13/89, G01S 13/931

(54) **VERFAHREN ZUM BETRIEB EINES FAHRERINFORMATIONSSYSTEMS IN EINEM KRAFTFAHRZEUG UND KRAFTFAHRZEUG**
METHOD FOR OPERATING A DRIVER INFORMATION SYSTEM IN A MOTOR VEHICLE AND MOTOR VEHICLE
PROCEDE DE FONCTIONNEMENT D'UN SYSTEME D'INFORMATION DU CONDUCTEUR DANS UN VEHICULE AUTOMOBILE ET VEHICULE AUTOMOBILE

(30) Priorität: 18.02.2015 DE 102015002145
(43) Veröffentlichungstag der Anmeldung: 24.08.2016
(73) Patentinhaber: AUDI AG, 85045 Ingolstadt (DE)
(72) Erfinder: Khlifi, Rachid, 85748 Garching (DE)
(74) Vertreter: Thielmann, Frank

(56) Entgegenhaltungen:
- WO-A1-2013/045374
- US-A1- 2007 013 497
- US-A1- 2009 259 401
- US-B1- 8 676 431
- TAKEDA YOHSUKE ET AL: "A 76- to 81-GHz transceiver chipset for long-range and short-range automotive radar", 2014 IEEE MTT-S INTERNATIONAL MICROWAVE SYMPOSIUM (IMS2014), IEEE, 1. Juni 2014 (2014-06-01), Seiten 1-3, XP032615168, DOI: 10.1109/MWSYM.2014.6848490 [gefunden am 2014-07-02]
- HUANG SHIH-JOU ET AL: "A Fully-Integrated 77GHz phase-array radar system with 1TX/4RX frontend and digital beamforming technique", 2013 SYMPOSIUM ON VLSI CIRCUITS, IEEE, 12. Juni 2013 (2013-06-12), XP032474840, ISBN: 978-1-4673-5531-5 [gefunden am 2013-08-13]
- Gordana Klaric Felic ET AL: "Single-Chip Millimeter Wave Radar", Microwave Journal, 1. Januar 2015 (2015-01-01), XP055282879, Gefunden im Internet: URL:https://www.researchgate.net/profile/G ordana_Klaric_Felic/publication/271386735_ Single-Chip_Millimeter_Wave_Radar/links/54 e372010cf282dbed6be89a.pdf?origin=publicat ion_detail [gefunden am 2016-06-22]

## Beschreibung

Die Erfindung betrifft ein Verfahren zum Betrieb eines Fahrerinformationssystems in einem Kraftfahrzeug, welches eine auf Sensordaten wenigstens eines Sensors basierende, für den Betrieb des Kraftfahrzeugs relevante Merkmale des Umfelds des Kraftfahrzeugs darstellende Umfelddarstellung erzeugt und anzeigt. Daneben betrifft die Erfindung ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Für moderne Kraftfahrzeuge wurden eine Vielzahl von Fahrerassistenzsystemen vorgeschlagen, die durch Auswertung von Eingangsdaten verschiedene Funktionen realisieren, beispielsweise, indem die Eingangsdaten durch Maßnahmenkriterien ausgewertet werden und bei Erfüllung der Maßnahmenkriterien Maßnahmen durchgeführt werden, beispielsweise die Ausgabe von Informationen an den Fahrer, Fahreingriffe und/oder die Anpassung von Betriebsparametern von Fahrzeugsystemen. Als Eingangsdaten werden häufig Sensordaten von Umfeldsensoren und/oder sonstigen Sensoren des Kraftfahrzeugs verwendet. Heutige Fahrerassistenzsysteme sind meist auf bestimmte Verkehrsszenarien fokussiert. So sind beispielsweise Spurwechselassistenzsysteme bekannt, die erst ab einer Mindestgeschwindigkeit aktiviert werden und ausschließlich beim Spurwechsel Unterstützung bieten. Nähert sich beispielsweise ein Kraftfahrzeug mit höherer Geschwindigkeit auf einer Nachbarspur, wird der Fahrer beim Betätigen des Fahrtrichtungsanzeigers gewarnt. Ein anderes Beispiel sind ACC-Systeme (Adaptive Cruise Control), die automatisch auf ein voranfahrendes Kraftfahrzeug regeln und gegebenenfalls den Fahrer warnen, wenn der Abstand zum voranfahrenden Kraftfahrzeug kritisch wird.

Komplexe Verkehrsszenarien, beispielsweise im städtischen Bereich, zeichnen sich dadurch aus, dass mehrere, kritische, unterschiedliche Verkehrssituationen entstehen können, welche bei heutigen, auf bestimmte Verkehrsszenarien fokussierten Fahrerassistenzsystemen zu einer Vielzahl von Informationen für den Fahrer an unterschiedlichen Stellen führen können. Beispielsweise erhält ein Fahrer eine Warnung am Rückspiegel, da er gerade durch ein anderes Kraftfahrzeug überholt wird, und eine weitere Warnung, dass ein Abstand zum voranfahrenden Kraftfahrzeug zu kurz ist. In derartigen komplexeren Verkehrssituationen ist es mithin möglich, dass der Fahrer durch gleichzeitiges und/oder mehrmaliges Warnen durch mehrere Fahrerassistenzsysteme, insbesondere Fahrerinformationssysteme, überfordert wird. Dann wird beispielsweise nur eine der Warnungen wahrgenommen und nur auf diese reagiert, so dass andere kritische Teilsituationen übersehen werden können.

Der Überwachungsbereich einzelner Fahrerassistenzsysteme ist auch bezüglich der Umfeldsensoren unterschiedlich. In dem genannten Beispiel ist das ACC-System auf das Vorfeld des Kraftfahrzeugs, insbesondere die dortigen Verkehrsteilnehmer, gerichtet, während ein Spurwechselassistenzsystem eher den rückwärtigen und seitlichen Verkehr überwacht. Ergänzen sich die Überwachungsbereiche unterschiedlicher vorhandener Fahrerassistenzsysteme nicht zu einer kompletten Abdeckung des Umfelds des Kraftfahrzeugs, existieren mithin Teilbereiche des Umfelds, die nicht durch Überwachung abgedeckt sind, so dass in manchen kritischen Verkehrssituationen keine Unterstützung, insbesondere Information, für den Fahrer angeboten wird. So sind gerade in dichteren Verkehrssituationen die Räume zwischen den einzelnen Verkehrsteilnehmern sehr eng, was die Wahrscheinlichkeit von kritischen Situationen bzw. Unfällen erhöht, so dass Blechschäden auftreten können.

WO 2013/045374 A1, US 2007/0013497 A1, US 2009/0259401 A1 und US 8676431 B1 beschreiben Fahrerinformationssysteme mit einer Umfelddarstellung.

Der Erfindung liegt daher die Aufgabe zugrunde, ein Fahrerinformationssystem zu schaffen, das dem Fahrer einen verbesserten Überblick in komplexen Verkehrssituationen bietet.

Die Erfindung ist durch die unabhängigen Ansprüche definiert. Weitere Ausführungsformen sind durch die abhängigen Ansprüche definiert.

Zur Lösung der oben genannten Aufgabe ist bei einem Verfahren der eingangs genannten Art erfindungsgemäß vorgesehen, dass als Sensor wenigstens ein in Halbleitertechnologie realisierter Radarsensor verwendet wird, wobei die Sensordaten zu einer Umfeldkarte ausgewertet werden, in der Merkmalen und/oder Teilbereichen des Umfelds unter Berücksichtigung der Sensordaten des Radarsensors wenigstens teilweise Kritikalitätswerte, die eine von den Merkmalen und/oder in dem Teilbereich enthaltenen Merkmalen ausgehende Beschädigungsgefahr für das Kraftfahrzeug beschreiben, zugeordnet werden, wobei die Wiedergabe der Merkmale und/oder Teilbereiche in der Umfelddarstellung in Abhängigkeit des Kritikalitätswerts modifiziert wird.

Die Erfindung nutzt also aus, dass inzwischen moderne Radarsensoren vorgeschlagen wurden, die in Halbleitertechnologie realisiert werden und eine hervorragende Abtastung des Umfelds des Kraftfahrzeugs ermöglichen. Dabei werden bevorzugt Weitwinkel-Radarsensoren mit einer Winkelauflösung in zwei zueinander senkrechten Ebenen, also mit einer entsprechend ausgebildeten Antennenanordnung, verwendet. Die Sensordaten der Radarsensoren stellen mithin eine Punktewolke dar, aus der sich hervorragend die Präsenz statischer und dynamischer Objekte im Umfeld des Kraftfahrzeugs ableiten lässt, aufgrund der hochgenauen Informationen mithin auch, ob diese Objekte eine Gefahr für das Kraftfahrzeug darstellen, mithin eine erhöhte Kritikalität im Bereich dieser Objekte gegeben ist. Idealerweise werden die Kritikalitätswerte dabei Teilbereichen des Umfelds des Kraftfahrzeugs zugeordnet, wobei bevorzugt zudem die Umfelddarstellung auf einer Einteilung in diese Teilbereiche beruht, so dass aufgrund der einfachen Darstellung von Zonen (Teilbereichen) im Umfeld eine hervorragende Übersicht gegeben ist, zum anderen aber eine gezielte Markierung kritischer Teilbereiche, wo potenzielle Gefahr vorhanden ist, ermöglicht wird, so dass Gefahrenzonen schnell und intuitiv erkannt werden können, die Verkehrssituation interpretiert werden kann und der Fahrer mithin schnell reagieren kann. Im Rahmen der vorliegenden Erfindung werden also hochgenaue Sensordaten von Radarsensoren genutzt, um dem Fahrer eine Gesamtübersicht des Umfelds des Kraftfahrzeugs mit einer Markierung kritischer Teilbereiche zu bieten, die leicht interpretierbar ist. Somit wird die Aufmerksamkeit bzw. Achtsamkeit des Fahrers bei der Durchführung bestimmter Fahrmanöver in komplexeren Verkehrssituationen, insbesondere im dichten Verkehr, gesteigert.

Dabei wird mit besonderem Vorteil als Umfelddarstellung eine eine Wiedergabe des Kraftfahrzeugs aus Vogelperspektive enthaltene Darstellung verwendet, mithin eine schematische Aufsicht auf die aktuelle Verkehrssituation, die die Einteilung in Teilbereiche besonders gut wiedergeben kann und eine hervorragende Orientierung des Fahrers ermöglicht.

Besonders vorteilhaft ist es dabei, wenn mehrere, insbesondere das Umfeld des Kraftfahrzeugs in einem 360°-Winkelbereich abdeckende Radarsensoren verwendet werden. Somit kann das gesamte Umfeld des Kraftfahrzeugs mit den Radarsensoren erfasst werden, deren Sensordaten idealerweise die hauptsächliche Grundlage für das Umfeldmodell und die daraus abgeleiteten Kritikalitätswerte bieten. Insbesondere ist auch eine Ausgestaltung der vorliegenden Erfindung denkbar, in der lediglich die Sensordaten der Radarsensoren als Eingangsdaten für das Fahrerinformationssystem genutzt werden. Nichtsdestotrotz kann es auch zweckmäßig sein, auch Sensordaten anderer Umfeldsensoren, beispielsweise von Kameras oder dergleichen, insbesondere im Rahmen einer Sensordatenfusion, zu nutzen.

Insbesondere sieht eine konkrete, vorteilhafte Ausgestaltung der vorliegenden Erfindung vor, dass acht Radarsensoren, die das Umfeld des Kraftfahrzeugs in einem 360°-Winkelbereich abdecken, vorgesehen sind. Vorzugsweise handelt es sich dabei um Weitwinkel-Radarsensoren, die zudem eine Antennenanordnung aufweisen, die die Vermessung von Winkeln in zwei zueinander senkrechten Ebenen erlaubt. Nachdem die Radarsensoren in Halbleiter-Technologie, insbesondere CMOS-Technologie, realisiert sind, können sie äußerst kleinbauend realisiert werden. Eine vorteilhafte Ausgestaltung sieht hierbei vor, dass jeweils drei Radarsensoren in den vorderen und hinteren Stoßfängern verbaut werden, während zwei seitliche Radarsensoren in seitlichen Türen des Kraftfahrzeugs integriert werden. Hierzu kann im Karosserieblech der Tür ein Fenster ausgeschnitten und mit radardurchlässigem Material aufgefüllt werden, wonach durch Überlackieren des Fensters der Radarsensor von außen nicht mehr zu erkennen ist, dennoch Sensordaten des seitlichen Umfelds liefert.

Eine konkrete Ausgestaltung der Erfindung sieht vor, dass als der wenigstens eine Radarsensor ein einen den Radartransceiver realisierenden Halbleiterchip, insbesondere CMOS-Chip, aufweisender Radarsensor verwendet wird. Besonders zweckmäßig ist es, wenn durch den Halbleiterchip auch eine digitale Signalverarbeitungskomponente des Radarsensors und/oder eine Steuereinheit des Radarsensors realisiert werden und/oder der Halbleiterchip und eine Antennenanordnung des Radarsensors als ein Package realisiert sind. Wie eingangs bereits dargelegt, ermöglicht dies nicht nur eine äußerst kleinbauende Realisierung des Radarsensors, sondern zusätzlich kurze Signalwege, mithin niedrige Signal-zu-Rauschverhältnisse. Derartige Radarsensoren lassen sich bei hohen Frequenzen und Frequenzbandbreiten betreiben, was die Abtasteigenschaften des Umfelds, insbesondere die Auflösung, weiter verbessert. Besonders zweckmäßig ist es, wenn der Radarsensor in einen Frequenzbereich von 77 bis 81 GHz und/oder mit einer Frequenzbandbreite größer als 2 GHz, insbesondere von 4 GHz, betrieben wird. Derartige Radarsensoren liefern aufgrund hoher Bandbreiten, insbesondere von 4 GHz, hervorragende Ortsauflösung in einem großen Einsatzbereich, beispielsweise von 0,3 bis 50 m. In Verbindung mit einer CMOS-Realisierung ergibt sich eine hochauflösende Radartechnologie, die eine äußerst genaue Vermessung des Umfelds erlaubt.

Mit besonderem Vorteil weisen die Radarsensoren dabei eine hohe Reichweite auf, was die vorliegende Erfindung deutlich von Parkassistenzsystemen abhebt, die sich lediglich auf die Abtastung des Ultranahbereichs beschränken. Eine zweckmäßige Weiterbildung der Erfindung sieht mithin vor, dass die Umfelddarstellung einen der Reichweite der Radarsensoren entsprechenden Abdeckungsbereich des Umfelds und/oder das Umfeld bis zu einem Abstand von wenigstens 30 m, insbesondere wenigstens 40 m, wiedergibt. Beispielsweise können mittels der beschriebenen CMOS-Technologie kleinbauende Radarsensoren realisiert werden, die eine Reichweite von 0,3 bis 50 m abdecken, welche dann auch zur Grundlage des in der Umfelddarstellung wiedergegebenen Umfeldanteils gemacht werden sollte. Durch den großen Abstand vom Kraftfahrzeug, den die Umfelddarstellung wiedergibt, ist es mithin eine hervorragende Übersicht über Problemzonen rund um das Kraftfahrzeug gegeben.

In Weiterbildung der Erfindung kann vorgesehen sein, dass die Ermittlung des Kritikalitätswertes in Abhängigkeit von wenigstens einem eine mögliche Kollision mit dem Merkmal und/oder in dem Teilbereich beschreibenden Kollisionsparameter, insbesondere einer Kollisionswahrscheinlichkeit und/oder einer Zeit bis zu einer Kollision, erfolgt. Beispielsweise kann die Kritikalität von Merkmalen, die in den Sensordaten des Radarsensors enthalten sind, bzw. Teilbereichen des Umfelds anhand eines Kollisionsvorausberechnungsalgorithmus beurteilt werden, wie er beispielsweise auch bei Sicherheitssystemen angewandt wird, um Parameter einer möglichen Kollision, insbesondere Kollisionswahrscheinlichkeiten zu ermitteln. Dabei kann beispielsweise vorgesehen sein, dass Trajektorien der potenziellen kritischen Merkmale, insbesondere bei dynamischen Objekten und/oder als Relativtrajektorien, vorausberechnet werden und anhand von Schnittpunkten mit der zukünftigen Trajektorie des eigenen Kraftfahrzeugs Kollisionsparameter bestimmt werden, beispielsweise Kollisionswahrscheinlichkeiten, eine Zeit bis zur Kollision (Time-to-Collision, TTC) und dergleichen. Selbstverständlich sind auch andere Ansatzweisen denkbar, um die Kritikalität von Objekten zu beurteilen. Insbesondere kann in einer Näherung bereits die Nähe des Objekts zum Kraftfahrzeug, gegebenenfalls in Zusammenschau mit dessen Ausdehnungen, die die Relevanz des Objekts beschreiben, ausreichend sein, um eine erste Kritikalitätsbewertung abzugeben; bevorzugt werden jedoch komplexerer Verkehrsanalysen durchgeführt.

Zweckmäßigerweise kann der Kritikalitätswert durch eine Einfärbung des Merkmals und/oder des Teilbereichs in der Umfelddarstellung abgebildet werden. Eine farbcodierte Darstellung hat sich als besonders intuitiv erfassbar für einen Betrachter gezeigt, wobei insbesondere klassische Warnfarben wie rot oder gelb für hohe Kritikalitätswerte eingesetzt werden können. So kann beispielsweise konkret vorgesehen sein, dass eine rote Einfärbung für einen einen ersten Schwellwert überschreitenden Kritikalitätswert und/oder eine gelbe Einfärbung für einen zwischen dem ersten und einem zweiten Schwellwert liegenden Kritikalitätswert und/oder eine grüne Einfärbung für einen unterhalb des zweiten Schwellwerts liegenden Kritikalitätswerts gewählt wird. Selbstverständlich sind auch feinere Abstufungen/Farbskalen möglich, um die Informationstiefe, falls gewünscht, weiter zu verbessern, beispielsweise durch Einführung der Farbe "orange" und dergleichen.

Eine weitere vorteilhafte Weiterbildung sieht vor, dass nicht erfasste und/oder in ihrer Kritikalität nicht hinreichend genau beurteilbare Teilbereiche des Umfelds unterscheidbar zu Teilbereichen und/oder Merkmalen mit zugeordnetem Kritikalitätswert dargestellt werden. Auf diese Weise wird dem Fahrer auch vermittelt, für welche Teilbereiche des Umfelds keine Informationen vorliegen, sei es, weil sie durch die Sensoren nicht abgedeckt sind, sei es, dass, beispielsweise aufgrund der Verlässlichkeit der Sensordaten und/oder einer die verwendeten Analysealgorithmen übersteigenden Komplexität der Verkehrssituation, keine verlässliche Aussage über das Gefährdungspotenzial getroffen werden kann. Beispielsweise können derartige Teilbereiche weiß oder blau dargestellt werden.

Eine konkrete, einfache Ausgestaltung der vorliegenden Erfindung sieht vor, dass einem einen Winkelbereich des Umfelds abdeckenden Teilbereich ein Kritikalitätswert in Abhängigkeit eines Abstandes eines ein Relevanzkriterium erfüllenden, innerhalb der Sensordaten des Radarsensors für den Teilbereich detektierten Merkmals von dem Kraftfahrzeug zugeordnet wird. Das Relevanzkriterium kann beispielsweise beurteilen, ob eine Kollision mit dem Objekt bzw. Merkmal überhaupt möglich wäre oder ob es überfahren/unterfahren wird. Ansonsten führt diese Auswertung insbesondere dazu, dass der Kritikalitätswert·von dem nächstgelegenen, relevanten Merkmal in den Sensordaten, insbesondere der Sensordaten des Radarsensors, abhängig gewählt wird. Somit können letztlich Zonen bzw. Sektoren als Teilbereiche durch Winkelbereiche bestimmt werden, die beispielsweise an den Ausrichtungen einzelner Radarsensoren orientiert sind. Mithin kann das Umfeld des Kraftfahrzeugs beispielsweise bei acht Radarsensoren in acht Sektoren/Winkelbereiche unterteilt werden, die insgesamt einen Teilbereich bilden können oder wiederum in kleinere, nach dem Abstand getrennte Teilbereiche unterteilt sind. Bei acht Sektoren kann mithin ein solcher Sektor hinter das Kraftfahrzeug, einer vor das Kraftfahrzeug, zwei seitlich und vier in den dazwischen liegenden Diagonalrichtungen vorliegen.

In Weiterbildung dieser Ausgestaltung können die Teilbereiche in der Umfelddarstellung in Abstandsbereiche eingeteilt sein, wobei jedem Kritikalitätswert eine Farbe zugeordnet ist und die Abstandsbereiche von außen beginnend in den jeweiligen der für die Abstände in dem Abstandsbereich zugeordneten Kritikalitätswert zugeordneten Farben aufgefüllt werden, bis der dem tatsächlichen Kritikalitätswert zugeordnete Abstandsbereich erreicht ist. Auf diese Weise ergibt sich eine besonders intuitive Möglichkeit zur Darstellung, indem als warnend bekannte Farbe und eine Nähe zum Kraftfahrzeug in der insbesondere der Vogelperspektive nachgestellten Umfelddarstellung deutlich vermittelt werden, von wo Gefahr droht. Liegt beispielsweise in einem Winkelbereich nur ein entferntes Objekt vor, kann ein äußerster Abstandsbereich als Teilbereich grün eingefärbt sein; liegt ein Objekt äußerst nahe am Kraftfahrzeug im nächstgelegenen Teilbereich bzw. Abstandsbereich, sind alle Abstandsbereichen zugeordneten Teilbereiche in der Umfelddarstellung eingefärbt, beispielsweise von grün über gelb und orange übergehend zu rot in dem Kraftfahrzeug nahegelegensten Teilbereich/Abstandsbereich. Winkelintervalle, für die keine Kritikalitätswerte vorliegen, können beispielsweise nicht eingefärbt in weiß verbleiben.

In einer anderen konkreten Ausgestaltung kann vorgesehen sein, dass die Umfelddarstellung eine gerastete Wiedergabe des durch sie dargestellten Abdeckungsbereiches ist, wobei in den einzelnen Rasterelementen ein von dem Kritikalitätswert des zugeordneten Teilbereichs und/oder der in dem zugeordneten Teilbereich enthaltenen Merkmale abhängiges Darstellungsmerkmal angezeigt wird, insbesondere eine Einfärbung. Zur Rasterung kann beispielsweise ein Gitter über das (in den Sensordaten abgedeckte) Umfeld gelegt werden, so dass sich rechteckige, insbesondere quadratische Rasterelemente ergeben, denen insbesondere eine die Kritikalität des Teilbereichs beschreibende Farbe zugeordnet wird. Beispielsweise kann eine Rasterung verwendet werden, die auch in der Umfeldkarte bereits gegeben ist. Dann ergibt sich eine hervorragende Ortsauflösung von Gefahrenzonen, die für den Fahrer intuitiv verständlich ist.

Es sei an dieser Stell noch angemerkt, dass als Anzeigevorrichtung für die Umfelddarstellung verschiedene Möglichkeiten existieren. So kann beispielsweise vorgesehen sein, dass die Umfelddarstellung auf einem Bildschirm, insbesondere einem Bildschirm eines Mensch-Maschine-Interface (MMI), des Kraftfahrzeugs dargestellt wird. In einer anderen Ausgestaltung oder zusätzlich kann vorgesehen sein, dass die Umfelddarstellung mittels eines Head-Up-Displays wiedergegeben wird. Besonders bevorzugt befindet sich die Anzeigefläche der verwendeten Anzeigevorrichtung in einem Bereich, den der Fahrer beim Überwachen der Verkehrssituation ohnehin einsieht, beispielsweise am unteren Rand der Windschutzscheibe.

Neben dem Verfahren betrifft die Erfindung auch ein Kraftfahrzeug, aufweisend ein Fahrerinformationssystem mit einem zur Durchführung des erfindungsgemäßen Verfahrens ausgebildeten Steuergerät. Selbstverständlich weist das Kraftfahrzeug auch den wenigstens einen Radarsensor und gegebenenfalls weitere Umfeldsensoren auf, deren Sensordaten durch das Steuergerät ausgewertet werden. Über eine geeignete Anzeigevorrichtung kann die Umfelddarstellung dem Fahrer zur Anzeige gebracht werden. Sämtliche Ausführungen zum erfindungsgemäßen Verfahren lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: den Aufbau eines verwendeten Radarsensors,
- Fig. 3: eine erste Möglichkeit zur Realisierung einer Umfelddarstellung, und
- Fig. 4: eine zweite Möglichkeit zur Realisierung einer Umfelddarstellung.

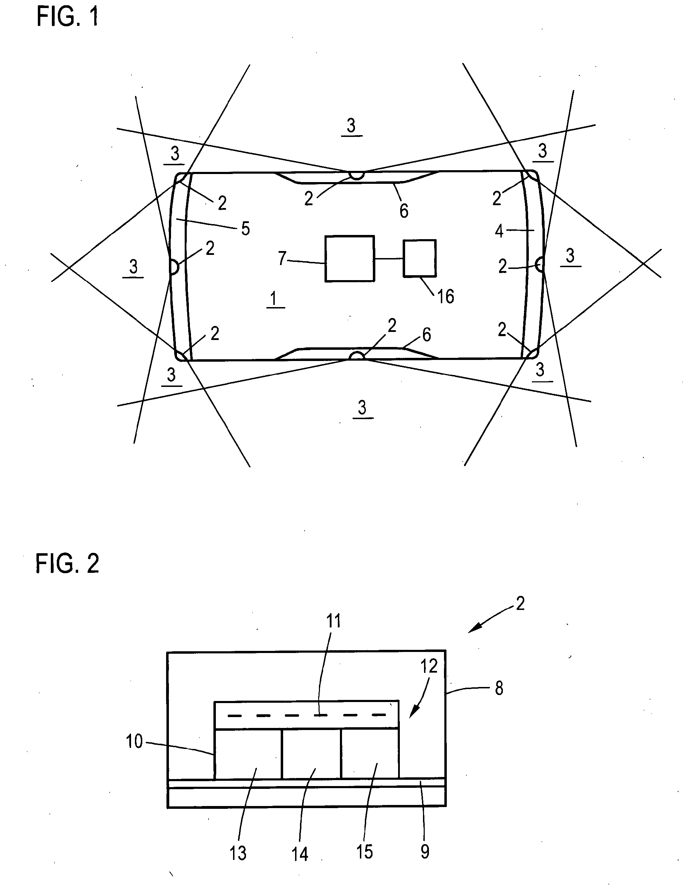

Fig. 1 zeigt eine Prinzipskizze eines erfindungsgemäßen Kraftfahrzeugs 1. Dieses weist vorliegend acht Radarsensoren 2 auf, die als Weitwinkel-Radarsensoren ausgebildet sind, auf Halbleiter-Technologie basieren und, wie anhand der angedeuteten Erfassungsbereiche 3 ersichtlich ist, eine 360°-Erfassung des Umfelds des Kraftfahrzeugs 1 erlauben. Dabei sind die Radarsensoren 2 vorliegend basierend auf CMOS-Technologie und somit äußerst kleinbauend realisiert, beispielsweise kleiner als 3 cm mal 3 cm, so dass sie im vorderen bzw. hinteren Stoßfänger 4, 5 des Kraftfahrzeugs 1 verbaut werden können und auch ein Verbau in seitlichen Türen 6 möglich ist, wenn beispielsweise ein radardurchlässiges Fenster im Blech vorgesehen wird.

Die Sensordaten der Radarsensoren 2 und gegebenenfalls vorgesehener weiterer Umfeldsensoren werden in einem Steuergerät 7 ausgewertet, welches auch zur Durchführung des erfindungsgemäßen Verfahrens ausgebildet ist. Mithin ist das Steuergerät 7 einem Fahrerinformationssystem als spezielles Fahrerassistenzsystem des Kraftfahrzeugs 1 zugeordnet.

Fig. 2 zeigt in Form einer Prinzipskizze den Aufbau der Radarsensoren 2 genauer. Ein Radarsensor 2 weist ein Gehäuse 8 auf, in dem eine Leiterplatte 9 gehaltert ist, auf der ein Halbleiterchip 10, hier ein CMOS-Chip, angeordnet ist. Der Halbleiterchip 10 ist gemeinsam mit einer Antennenanordnung 11 des Radarsensors 2 als ein Package 12 realisiert, wobei die Antennenanordnung 11 so ausgestaltet ist, dass Winkel zu einem reflektierenden Punkt in zwei zueinander senkrechten Ebenen erfasst werden können.

Durch den Halbleiterchip 10 werden vorliegend neben dem Radartransceiver 13 auch eine digitale Signalverarbeitungskomponente 14 (DSP) und eine Steuereinheit 15 des Radarsensors 2 realisiert.

Die Radarsensoren 2 werden in einem Frequenzbereich von 77 bis 81 GHz bei einer Frequenzbandbreite von 4 GHz betrieben, um hochauflösend das Umfeld des Kraftfahrzeugs 1 beschreibende Sensordaten liefern zu können.

Im Steuergerät 7 werden diese Sensordaten nun ausgewertet, um zu einer Umfeldkarte zu gelangen. In der Umfeldkarte ist das (erfasste) Umfeld des Kraftfahrzeugs 1 in Teilbereiche aufgeteilt. Den Teilbereichen können anhand der in ihm detektierten Merkmale/Objekte Kritikalitätswerte zugeordnet werden, wobei es auch denkbar ist, Merkmalen Kritikalitätswerte zuzuordnen und einen einem Teilbereich zugeordneten Kritikalitätswert aus den Kritikalitätswerten der in dem Teilbereich befindlichen Merkmale abzuleiten, beispielsweise als den höchsten Kritikalitätswert oder eine gegebenenfalls gewichtete Summe.

Die Radarsensoren 2 erfassen statische und dynamische Objekte, wobei es zur Ermittlung des Kritikalitätswerts zweckmäßig sein kann, für Merkmale, die ein Relevanzkriterium erfüllen, bei denen also insbesondere eine Kollision mit Beschädigungsgefahr für das Kraftfahrzeug möglich ist, Kollisionsbetrachtungen anzustellen, um beispielsweise Kollisionswahrscheinlichkeiten oder dergleichen als Kollisionsparameter zu bestimmen, die dem Kritikalitätswert zugrunde gelegt werden können. Selbstverständlich sind auch andere Analysen zusätzlich oder alternativ möglich, wie sie im Stand der Technik grundsätzlich zur Bewertung der Kritikalität von detektierten Merkmalen/Objekten zur Bestimmung von deren Gefährdungspotenzial für das Kraftfahrzeug vorgeschlagen wurden.

Die Umfeldkarte umfasst den Anteil des Umfelds des Kraftfahrzeugs 1, der in der Reichweite der Radarsensoren 2 liegt, hier mithin einen Abstandsbereich von 30 cm bis 50 m. Es sei noch angemerkt, dass nicht jedem Merkmal/Teilbereich ein Kritikalitätswert zugeordnet werden muss, nachdem manche Teilbereiche gegebenenfalls nicht erfassbar sind, beispielsweise aufgrund von Abschattungen und/oder sich Kritikalitätswerte nicht verlässlich genug berechnen lassen.

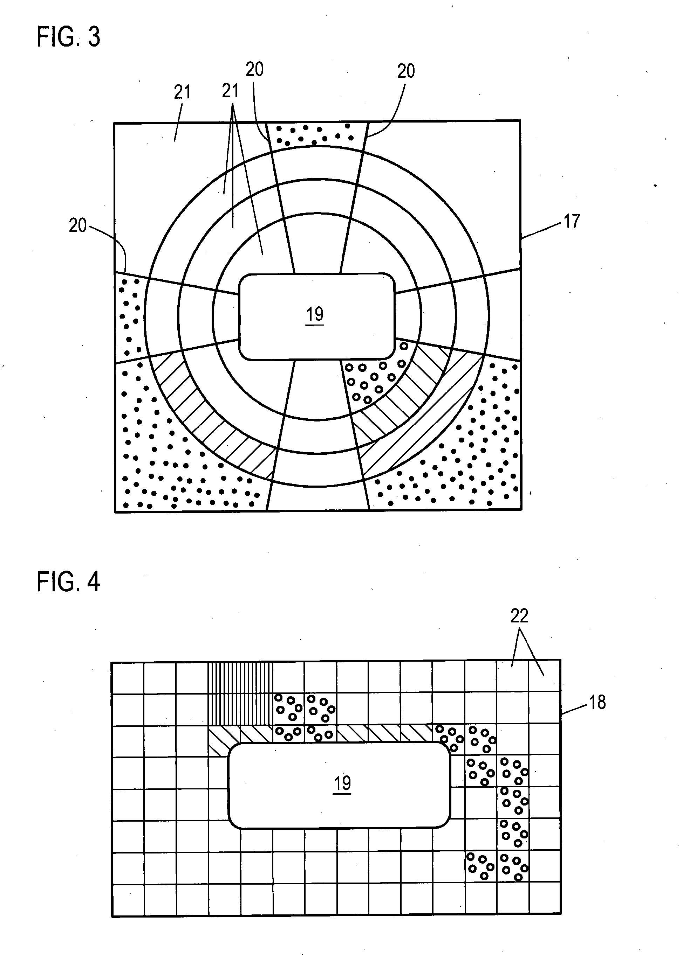

Aus der Umfeldkarte soll nun eine dem Fahrer anzuzeigende Umfelddarstellung erzeugt werden, die idealerweise das durch die Umfeldkarte abgedeckte Umfeld wiedergibt, mithin hier auch eine Reichweite von 50 m. Die Einteilung in Teilbereiche, wie sie in der zu generierenden Umfelddarstellung gewünscht ist, kann gegebenenfalls schon für die Umfeldkarte gegeben sein; Beispiele werden im Folgenden im Hinblick auf die Fig. 3 und 4 diskutiert.

Gemein haben diese Ausführungsbeispiele, dass Teilbereichen zugeordnete Kritikalitätswerte ebenso in der jeweils als Draufsicht aus Vogelperspektive realisierten Umfelddarstellung wiedergegeben werden, konkret durch Farbcodierung, so dass der Fahrer Gefahrenzonen um das Kraftfahrzeug 1 leicht erkennen kann. Die Umfelddarstellung wird mittels einer Anzeigevorrichtung 16 (vgl. Fig. 1) dargestellt, bei der es sich um einen Bildschirm an einem Mensch-Maschine-Interface (MMI) des Kraftfahrzeugs handeln kann, gegebenenfalls aber auch um ein Head-Up-Display. Bevorzugt erfolgt die Wiedergabe der Umfelddarstellung am unteren Rand der Windschutzscheibe, beispielsweise an einem Scheibenwurzeldisplay.

Beispiele für mögliche Umfelddarstellungen sind in den Fig. 3 und 4 dargestellt. Beide in den Fig. 3 und 4 beispielhaft gezeigten Umfelddarstellungen 17, 18 sind als Draufsichten realisiert, deren Zentrum ein Abbild 19 des Kraftfahrzeugs 1 bildet. Im Fall der Fig. 3 in der Umfelddarstellung 17 ist das Umfeld des Kraftfahrzeugs in acht Sektoren unterteilt, vgl. die Linien 20, die jeweils bestimmten Winkelbereichen um das Kraftfahrzeug herum entsprechen und vorliegend mit den Ausrichtungen der Radarsensoren 2 korrelieren. Diese Sektoren sind nun wiederum in jeweils bestimmten Abstandsintervallen zugeordneten Teilbereiche unterteilt, denen jeweils ein Kritikalitätswert zugeordnet ist, der insbesondere vom Abstand eines relevanten, in dem Teilbereich 21 enthaltenen Merkmals abhängig ist. Um eine intuitive Darstellung zu erhalten, sind den jeweiligen Kritikalitätswerten Farben zugeordnet, wobei die Teilbereiche 21 immer von außen her, also von hohen Abständen her, aufgefüllt werden, indem die dem entsprechenden Kritikalitätswert zugeordneten Farben in dem Teilbereich 21 realisiert werden, bis der dem Kraftfahrzeug 1 nächstgelegene Teilbereich 21, in dem ein relevantes Merkmal mit zugeordnetem Kritikalitätswert enthalten ist, erreicht ist. Teilbereiche 21 zum Kraftfahrzeug hin, denen kein Kritikalitätswert zugeordnet ist, die mithin kein relevantes Merkmal enthalten, werden weiter weiß dargestellt.

Vorliegend ist der unten rechts dargestellte Sektor als am kritischsten zu bewerten, denn alle hier beispielhaft vier Teilbereiche 21 bis zum Abbild 19 des Kraftfahrzeugs 1 sind farblich markiert, und zwar ganz außen in grün, dann gelb, dann orange und schließlich im am Kraftfahrzeug anschließenden Teilbereich 21 in rot, wie durch die verschiedenen Schraffuren angedeutet ist.

Der Sektor unten links ist weniger kritisch zu bewerten, denn dort sind nur zwei der vier Teilbereiche durch das Auffüllen farblich markiert worden, und zwar in grün und gelb. Der rechte und der obere Sektor enthalten nur ganz außen Merkmale geringen Kritikalitätswerts aufgrund des hohen Abstands, so dass hier außen grüne Farbcodierungen zu erkennen sind.

Eine alternative, genauer aufgeschlüsselte Form einer Umfelddarstellung 18 zeigt Fig. 4, in der wiederum zentral das Abbild 19 des Kraftfahrzeugs 1 zu erkennen ist. Das abgedeckte Umfeld 18 ist hier gerastert, so dass quadratische Rasterelemente entstehen. Jedem dieser Rasterelemente 22 als Teilbereiche ist dabei eine Farbe zugeordnet, die sich auf den Kritikalitätswert bezieht. Ist ein Kritikalitätswert vorhanden, der einen zweiten Schwellwert unterschreitet, gilt das Rasterelement 22 als unkritisch und wird in grün dargestellt (in Fig. 4 keine Musterung enthaltend). Zwischen einem ersten und einem zweiten Schwellwert liegende Kritikalitätswerte sorgen dafür, dass das entsprechende Rasterelement 22 gelb dargestellt wird, in Fig. 4 durch eine Schrägschraffur dargelegt. Übersteigt der Kritikalitätswert den zweiten Schwellwert, wird das Rasterelement 22 rot eingefärbt, wie in den in Fig. 4 mit kleinen Kreisen gemusterten Teilbereichen der Fall ist. Liegt für ein Rasterelement 22 kein Kritikalitätswert vor, sei es, weil dazu keine Sensordaten vorliegen oder zumindest für eine verlässliche Bestimmung eines Kritikalitätswertes keine ausreichenden Sensordaten, beispielsweise weil der Bereich abgeschattet ist, werden die entsprechenden Rasterelemente blau eingefärbt, in Fig. 4 durch eine Musterung mit vertikalen Strichen dargestellt.

Die Umfelddarstellungen 17, 18 sind jeweils geeignet, dem Fahrer intuitiv einen Überblick darüber zu verschaffen, wo um sein Kraftfahrzeug 1 Gefahrenzonen vorliegen. Die hochaufgelösten, verlässlichen Radardaten des aus den acht Radarsensoren 2 gebildeten Radarsystems liefern eine hervorragende Grundlage zur Erstellung der Umfeldkarte, zur Kritikalitätsbewertung und schließlich zur Ermittlung der entsprechenden, zu verwendenden Umfelddarstellung 17, 18.

## Patentansprüche

1. Verfahren zum Betrieb eines Fahrerinformationssystems in einem Kraftfahrzeug (1), welches eine auf Sensordaten mehrerer Radarsensoren (2) basierende, für den Betrieb des Kraftfahrzeugs (1) relevante Merkmale des Umfelds des Kraftfahrzeugs (1) darstellende Umfelddarstellung (17, 18) erzeugt und auf einer Anzeigevorrichtung des Kraftfahrzeugs (1) anzeigt, wobei die Sensordaten zu einer Umfeldkarte ausgewertet werden, in der Merkmalen und/oder Teilbereichen (21) des Umfelds unter Berücksichtigung der Sensordaten der Radarsensoren (2) wenigstens teilweise Kritikalitätswerte, die eine von den Merkmalen und/oder in dem Teilbereich (21) enthaltenen Merkmalen ausgehende Beschädigungsgefahr für das Kraftfahrzeug (1) beschreiben, zugeordnet werden, wobei die Wiedergabe der Merkmale und/oder Teilbereiche (21) in der Umfelddarstellung (17, 18) in Abhängigkeit des Kritikalitätswertes modifiziert wird, wobei in Halbleitertechnologie realisierte, das Umfeld des Kraftfahrzeugs (1) in einem 360°-Winkelbereich abdeckende Radarsensoren (2) verwendet werden, wobei nicht erfasste und/oder in ihrer Kritikalität nicht hinreichend genau beurteilbare Teilbereiche (21) des Umfelds unterscheidbar zu Teilbereichen (21) und/oder Merkmalen mit zugeordnetem Kritikalitätswert dargestellt werden, wobei einem einen Winkelbereich des Umfelds abdeckenden Teilbereich (21) ein Kritikalitätswert in Abhängigkeit eines Abstandes eines ein Relevanzkriterium erfüllenden, innerhalb der Sensordaten des jeweiligen Radarsensors (2) für den Teilbereich (21) detektierten Merkmals von dem Kraftfahrzeug (1) zugeordnet wird, wobei die Teilbereiche (21) in der Umfelddarstellung (17, 18) als Abstandsbereiche realisiert sind, wobei jedem Kritikalitätswert eine Farbe zugeordnet ist und die Abstandsbereiche von außen beginnend in den jeweiligen der für die Abstände in dem Abstandsbereich zugeordneten Kritikalitätswert zugeordneten Farben aufgefüllt werden, bis der dem tatsächlichen Kritikalitätswert zugeordnete Abstandsbereich erreicht ist.

2. Verfahren nach Anspruch 1,
**dadurch gekennzeichnet,**
**dass** als der wenigstens eine Radarsensor (2) ein einen den Radartransceiver (13) realisierenden Halbleiterchip (10), insbesondere CMOS-Chip, aufweisender Radarsensor (2) verwendet wird.

3. Verfahren nach Anspruch 2,
**dadurch gekennzeichnet,**
**dass** durch den Halbleiterchip (10) auch eine digitale Signalverarbeitungskomponente (14) des Radarsensors (2) und/oder eine Steuereinheit (15) des Radarsensors (2) realisiert werden und/oder der Halbleiterchip (10) und eine Antennenanordnung (11) des Radarsensors (2) als ein Package (12) realisiert sind.

4. Verfahren nach einem der vorangehenden Ansprüche,
**dadurch gekennzeichnet,**
**dass** der Radarsensor (2) in einem Frequenzbereich von 77 bis 81 GHz und/oder mit einer Frequenzbandbreite größer als 2 GHz, insbesondere von 4 GHz, betrieben wird.

5. Verfahren nach einem der vorangehenden Ansprüche,
**dadurch gekennzeichnet,**
**dass** die Umfelddarstellung (17, 18) einen der Reichweite der Radarsensoren (2) entsprechenden Abdeckungsbereich des Umfelds und/oder das Umfeld bis zu einem Abstand von wenigstens 30 Metern, insbesondere wenigstens 40 Metern, wiedergibt.

6. Verfahren nach einem der vorangehenden Ansprüche,
**dadurch gekennzeichnet,**
**dass** die Ermittlung des Kritikalitätswertes in Abhängigkeit von wenigstens einem eine mögliche Kollision mit dem Merkmal und/oder in dem Teilbereich beschreibenden Kollisionsparameter, insbesondere einer Kollisionswahrscheinlichkeit und/oder einer Zeit bis zu einer Kollision, erfolgt.

7. Verfahren nach einem der vorangehenden Ansprüche,
**dadurch gekennzeichnet,**
**dass** der Kritikalitätswert durch eine Einfärbung des Merkmals und/oder des Teilbereichs (21) in der Umfelddarstellung (17, 18) abgebildet wird.

8. Verfahren nach Anspruch 7,
**dadurch gekennzeichnet,**
**dass** eine rote Einfärbung für einen einen ersten Schwellwert überschreitenden Kritikalitätswert und/oder eine gelbe Einfärbung für einen zwischen dem ersten und einem zweiten Schwellwert liegenden Kritikalitätswert und/oder eine grüne Einfärbung für einen unterhalb des zweiten Schwellwerts liegenden Kritikalitätswert gewählt wird.

9. Verfahren nach einem der vorangehenden Ansprüche,
**dadurch gekennzeichnet,**
**dass** als Umfelddarstellung (17, 18) eine eine Wiedergabe (19) des Kraftfahrzeugs aus Vogelperspektive enthaltende Darstellung verwendet wird.

10. Kraftfahrzeug (1), aufweisend :
mehrere in Halbleitertechnologie realisierte, das Umfeld des Kraftfahrzeugs (1) in einem 360°-Winkelbereich abdeckende Radarsensoren (2);
eine Anzeigevorrichtung; und
ein Steuergerät (7), das dazu ausgebildet ist, ein Verfahren nach einem der vorangehenden Ansprüche durchzuführen, um basierend auf Sensordaten der Radarsensoren (2) eine entsprechende Umfelddarstellung (17, 18) zu erzeugen und auf der Anzeigevorrichtung anzuzeigen.

## Claims

1. Method for operating a driver information system in an motor vehicle (1), which produces and displays on a display device of the motor vehicle (1) a representation of the surrounding area (17, 18) based on sensor data from a plurality of radar sensors (2) and showing relevant features of the area surrounding the motor vehicle (1) for operating the motor vehicle (1), wherein the sensor data are evaluated for a map of the surroundings in which at least partly criticality values are assigned to features and/or subsections (21) of the surrounding area, taking into account the sensor data of the radar sensors (2), which criticality values describe a risk of damage to the motor vehicle (1) on the basis of the features and/or features contained in the subsection (21), wherein the reproduction of the features and/or subsections (21) in the representation of the surrounding area (17, 18) is modified as a function of the criticality value, wherein radar sensors (2) are used which are implemented in semiconductor technology and cover the surrounding area of the motor vehicle (1) in a 360° angle range, wherein non-detected subsections (21) of the surrounding area and/or subsections, which cannot be assessed accurately enough with regard to their criticality, are represented as distinct from subsections (21) and/or features with an assigned criticality value, wherein a criticality value is assigned to a subsection (21) covering an angle range of the surrounding area as a function of a distance of a feature of the motor vehicle (1) fulfilling a relevancy criterion, detected within the sensor data of the respective radar sensor (2) for the subsection (21), wherein the subsections (21) in the representation of the surrounding area (17, 18) are in the form of distance ranges, wherein a colour is assigned to each criticality value and the distance ranges beginning from the outside are filled by colours assigned to the respective criticality value assigned to the distances in the distance range, until the distance range assigned to the actual criticality value has been reached.

2. Method according to claim 1,
**characterised in that**
as the at least one radar sensor (2) a radar sensor (2) is used having a semiconductor chip (10) implementing the radar transceiver (13), in particular a CMOS-chip.

3. Method according to claim 2,
**characterised in that**
also a digital signal processing component (14) of the radar sensor (2) and/or a control unit (15) of the radar sensor (2) are implemented by the semiconductor chip (10) and/or the semiconductor chip (10) and an antenna arrangement (11) of the radar sensor (2) are implemented as a package (12).

4. Method according to any of the preceding claims,
**characterised in that**
the radar sensor (2) is operated in a frequency range of 77 to 81 GHz and/or with a frequency bandwidth greater than 2 GHz, in particular 4 GHz.

5. Method according to any of the preceding claims,
**characterised in that**
the representation of the surrounding area (17, 18) shows a coverage area of the surroundings and/or the surroundings up to distance of at least 30 metres, in particular at least 40 metres, said coverage area corresponding to the range of the radar sensors (2).

6. Method according to any of the preceding claims,
**characterised in that**
the criticality value is determined as a function of at least one collision parameter describing a possible collision with the feature and/or in the subsection, in particular a probability of collision and/or a time to a collision.

7. Method according to any of the preceding claims,
**characterised in that**
the criticality value is displayed by colouring the feature and/or the subsection (21) in the representation of the surroundings (17, 18).

8. Method according to claim 7,
**characterised in that**
a red colour is selected for a criticality value exceeding a first threshold and/or a yellow colour is selected for a criticality value between the first and a second threshold and/or a green colour is selected for a criticality value below the second threshold.

9. Method according to any of the preceding claims,
**characterised in that**
as a representation of the surrounding area (17, 18) a visualisation is used which includes a reproduction (19) of the motor vehicle from a bird's-eye perspective.

10. Motor vehicle (1), having:
a plurality of radar sensors (2), implemented in semiconductor technology, covering the area surrounding the motor vehicle (1) in a 360° angle range,
a display device and
a control device (7) which is designed to perform a method according to any of the preceding claims, in order to create a corresponding visualisation of the surrounding area (17, 18) based on sensor data of the radar sensors (2) and display it on the display device.

## Revendications

1. Procédé de fonctionnement d'un système d'information de conducteur dans un véhicule automobile (1), lequel produit et affiche sur un dispositif d'affichage du véhicule automobile (1) une représentation d'environnement (17, 18), basée sur des données de capteur de plusieurs capteurs radars (2), représentant des caractéristiques de l'environnement du véhicule automobile (1) pertinentes pour le fonctionnement du véhicule automobile (1), dans lequel les données de capteur sont évaluées pour établir une carte d'environnement, dans laquelle au moins partiellement des valeurs de criticité décrivant un risque de dommage pour le véhicule automobile (1) à partir des caractéristiques et/ou des caractéristiques contenues dans la zone partielle (21), sont associées aux caractéristiques et/ou aux zones partielles (21) de l'environnement en tenant compte des données de capteur des capteurs radars (2), dans lequel la reproduction des caractéristiques et/ou des zones partielles (21) dans la représentation d'environnement (17, 18) est modifiée en fonction de la valeur de criticité, dans lequel sont utilisés des capteurs radars (2) mis en œuvre dans la technologie des semi-conducteurs couvrant l'environnement du véhicule automobile (1) sur une plage angulaire de 360°, dans lequel des zones partielles (21) de l'environnement non détectées et/ou ne pouvant être évaluées suffisamment précisément au niveau de leur criticité sont représentées en pouvant être distinguées en zones partielles (21) et/ou caractéristiques présentant la valeur de criticité associée, dans lequel à une zone partielle (21) couvrant une plage angulaire de l'environnement est associée une valeur de criticité en fonction d'une distance d'une caractéristique remplissant un critère de pertinence, détectée au sein des données de capteur du capteur radar respectif (2) pour la zone partielle (21) par le véhicule automobile, dans lequel les zones partielles (21) dans la représentation d'environnement (17, 18) sont réalisées en tant que plages de distance, une couleur étant associée à chaque valeur de criticité et les plages de distance, en commençant par l'extérieur, sont remplies dans les couleurs respectives associées à la valeur de criticité attribuée aux distances dans la plage de distance jusqu'à ce que la plage de distance associée à la valeur de criticité effective soit atteinte.

2. Procédé selon la revendication 1,
**caractérisé en ce que**
un capteur radar (2) comportant une puce semi-conductrice (10), en particulier une puce CMOS, qui réalise l'émetteur-récepteur radar (13), est utilisé comme le au moins un capteur radar (2).

3. Procédé selon la revendication 2,
**caractérisé en ce que**
un composant de traitement de signal numérique (14) du capteur radar (2) et/ou une unité de commande (15) du capteur radar (2) sont également mis en œuvre par la puce semi-conductrice (10) et/ou la puce semi-conductrice (10) et un ensemble d'antennes (11) du capteur radar (2) sont mis en œuvre sous forme de Package (12).

4. Procédé selon l'une quelconque des revendications précédentes,
**caractérisé en ce que**
le capteur radar (2) est utilisé dans une gamme de fréquences de 77 à 81 GHz et/ou avec une largeur de bande de fréquences supérieure à 2 GHz, en particulier de 4 GHz.

5. Procédé selon l'une quelconque des revendications précédentes,
**caractérisé en ce que**
la représentation d'environnement (17, 18) reproduit une zone de couverture de l'environnement correspondant à la portée des capteurs radars (2) et/ou l'environnement jusqu'à une distance d'au moins 30 mètres, en particulier au moins 40 mètres.

6. Procédé selon l'une quelconque des revendications précédentes,
**caractérisé en ce que**
la détermination de la valeur de criticité est effectuée en fonction d'au moins un paramètre de collision décrivant une collision possible avec la caractéristique et/ou dans la zone partielle, en particulier une probabilité de collision et/ou un délai avant une collision.

7. Procédé selon l'une quelconque des revendications précédentes,
**caractérisé en ce que**
la valeur de criticité est représentée par une coloration de la caractéristique et/ou de la zone partielle (21) dans la représentation d'environnement (17, 18).

8. Procédé selon la revendication 7,
**caractérisé en ce que**
une coloration rouge pour une valeur de criticité excédant une première valeur de seuil et/ou une coloration jaune pour une valeur de criticité située entre la première et une seconde valeur de seuil et/ou une coloration verte pour une valeur de criticité située en dessous de la seconde valeur de seuil est sélectionnée.

9. Procédé selon l'une quelconque des revendications précédentes,
**caractérisé en ce que**
une représentation contenant une reproduction (19) du véhicule automobile vue du ciel est utilisée en tant que représentation d'environnement (17, 18).

10. Véhicule automobile (1) comprenant :
plusieurs capteurs radars (2) réalisés dans la technologie des semi-conducteurs couvrant l'environnement du véhicule automobile (1) dans une plage angulaire de 360° ;
un dispositif d'affichage ; et
un appareil de commande (7) qui est configuré pour exécuter un procédé selon l'une des revendications précédentes, afin de produire sur la base des données de capteur des capteurs radars (2), et afficher sur le dispositif d'affichage, une représentation d'environnement correspondante (17, 18).
